# EUROPEAN PATENT SPECIFICATION

(11) **EP 4 077 911 B1**
(45) Date of publication and mention of the grant of the patent: **04.03.2026**
(21) Application number: 20828021.4
(22) Date of filing: 11.12.2020
(51) Int. Cl.: F03D 1/02, F03D 80/50, F03D 13/20

(54) **A MULTIPLE ROTOR RAIL PULLEY SYSTEM**
RIEMENSCHEIBENSYSTEM MIT MEHREREN ROTOREN
SYSTÈME DE POULIE À RAILS À ROTORS MULTIPLES

(30) Priority: 20.12.2019 DK PA201970822
(43) Date of publication of application: 26.10.2022
(73) Proprietor: VESTAS WIND SYSTEMS A/S, 8200 Aarhus N (DK)
(72) Inventor: NETO, Julio Xavier Vianna, 8200 Århus N (DK); JØRGENSEN, Brian, 8464 Galten (DK); DALSGAARD, Søren, 8370 Hadsten (DK)
(74) Representative: Vestas Patents Department
(86) International application number: PCT/DK2020/050353
(87) International publication number: WO 2021/121502

(56) References cited:
- EP-A1- 3 074 628
- EP-A1- 3 339 631
- EP-B1- 3 074 628
- WO-A1-2019/120460
- GB-A- 2 443 886
- KR-B1- 101 988 163
- US-A1- 2018 017 042
- US-A1- 2018 363 622
- US-A1- 2019 127 032

## Description

### INTRODUCTION

The disclosure relates to a multiple rotor (MR) wind turbine comprising a tower extending in an upwards direction, a load carrying structure extending in an outwards direction and being carried by the tower, and energy generating units being carried by the load carrying structure.

### BACKGROUND

In an offshore single rotor (SR) wind turbine, the nacelle hoist will be aligned vertically with the platform at the tower base. This allows direct hoisting of objects from the platform to the nacelle vice, versa.

In MR turbines, the nacelles are offset from the tower meaning that a vertical hoisting line from the nacelle would reach the surface of the water rather than a platform at the tower base. The logistics are therefore much more complicated. In the construction phase and during maintenance of the MR wind turbine, various objects of the energy generating units are replaced. Such objects are typically transported from the energy generating unit to the base of the tower, e.g. via an internal passage in the tower and/or through an internal passage in the load carrying structure. Otherwise, they may be hoisted through an opening in the nacelle which forms the outer sheltering of the energy generating unit and directly to the ground by use of a crane structure.

EP3339631 relates to a wind turbine system with wind turbines arranged on a common supporting structure for converting wind energy into electrical energy, with a central tower and a first and second supporting member as well as a traverse which is arranged on the outer end of the supporting members and connects them, a first wind energy plant which is arranged rotatably on a first end area of the crossbeam by means of a first adjusting device, a second wind energy plant which is arranged on a second end area of the traverse is rotatably arranged by means of a second adjusting device, and wherein the adjusting devices are designed for pivoting a respective axis of rotation of rotors of the wind turbines in a plane perpendicular to a plane of rotation of the rotors, and a control device for controlling the adjusting devices for individually changing the pivots position of each wind turbine.

### SUMMARY

It is an object of embodiments to improve handling of objects to and from the energy generating unit. The invention is defined by the appended claims: a multiple rotor (MR) wind turbine according to independent claim 1, and a method of handling a wind turbine object in a wind turbine according to independent claim 14. Further aspects of the invention are defined in the dependent claims 2 to 13.

According to this and other objects, the disclosure, in a first aspect, provides an MRT which further comprises a hoisting line for transport of objects, e.g. spare parts, tools or personnel to and from the energy generating unit. The hoisting line of this disclosure is windable from an attachment point of the load carrying structure or from the energy generating unit, and it extends from the attachment point via a suspension point to a free end by which the object can be attached. To allow selection of a specific position on ground, on a boat, or on a platform on the ocean, where the object is to be placed, or to allow the object to be hoisted relatively close to the tower compared to the distance between the tower and the energy generating unit, the suspension point is movable along an outer surface of the load carrying structure, along a track along on upper surface, a lower surface, or a side surface of the load carrying structure.

The system may reduce time for service and may potentially be used for evacuation of personnel. Additionally, it enables construction of the MR wind turbine with nacelles configured for SR wind turbines designed for transport of objects and evacuation outside the nacelle.

The suspension point is movable along a track which runs along the outer surface of the load carrying structure. The track may form a path for a first vehicle which runs, e.g. like a linear bearing and holds the suspension point. The track may run the total length of the load carrying structure from the nacelle to the tower, e.g. below the load carrying structure or on top of the load carrying structure or along a side surface of the load carrying structure.

The load carrying structure may be constituted by a compression structure, e.g. a rigid tubular structure, and one or more tension structures, e.g. wires or rods. In this case, the track may be formed by one of the tension structures.

The first vehicle and the suspension point may be connected by a cable. The cable may particularly be sufficiently long for the suspension point to be pulled by the hoisting line all the way to the nacelle, or even through a hatch in the nacelle into in internal space in the nacelle.

A winding structure may be located for winding the hoisting line. Herein, the winding structure may constitute the attachment point, or the attachment point may be a separate point away from the winding structure.

In one embodiment, a brake structure is provided by which movement between the hoisting line and the suspension point can be prevented or limited. The brake structure may include an electrically or mechanically actuated device configured to lock movement of the hoisting line relative to the suspension point. In one embodiment, the suspension point is a pulley, and the brake may include locking means providing friction to reduce or completely prevent rotation of the pulley.

In one embodiment, a stopping structure is provided to prevent or limit movement between the suspension point and the load carrying structure. In one embodiment the stopping structure is configured to increase friction between the said first vehicle and the track, e.g. increase friction to a point where the vehicle can not move at all.

A hatch opening may be provided into an inner space in the nacelle of the energy generating unit. In this embodiment, a continuous path may be provided for the hoisting line from the hatch to the load carrying structure. The continuous path could be provided by a rail-section configured to hold the suspension point and extending to the energy generating unit, e.g. underneath the energy generating unit or along a side of the energy generating unit. The rail-section may hold the suspension point via a second vehicle which is guided by the rail-section, e.g. like a linear bearing structure.

The second vehicle and the suspension point may be connected by a cable, e.g. a cable having a length which is sufficient for the suspension point to reach inside the nacelle, e.g. through a hatch.

A second hoisting line may be windable from a second attachment point at or near the tower, and particularly from a part of the wind turbine which is yawed by the yawing structure. The second hoisting line may be arranged to move the suspension point along the load carrying structure. The second hoisting line may e.g. move the suspension point by moving the said first vehicle which follows the track along the outer surface of the load carrying structure.

The second hoisting line may be winded by a winch located in the energy generating unit. In that case, the second attachment point may be a pulley near or at the tower, and the second hoisting line may extend from the suspension point around that pulley and back to the energy generating unit where it can be winded by a winch to thereby position the suspension point along the outer surface of the load carrying structure.

In a second aspect, the disclosure provides a method of handling a wind turbine object in a wind turbine comprising a tower extending in an upwards direction, a load carrying structure fixed to the tower and extending in an outwards direction transverse to the upwards direction, and an energy generating unit fixed to the load carrying structure, the method comprising:
- providing a hoisting line being windable from an attachment point of the load carrying structure or of the energy generating unit and extending from the attachment point to a lifting point,
- providing a suspension point which is movable along an outer surface of the load carrying structure,
- suspending the hoisting line in the suspension point, the suspension point being between the attachment point and the lifting point; and
- moving the suspension point along the outer surface while winding out the hoisting line from the attachment point.

To avoid tower collision, various structures may be used during the decent of the object along the tower wall. Examples include use of magnets to keep the object along the tower, use of a tower climber structure with wheels against the tower and arranged to push the object away from the tower.

### BRIEF DESCRIPTION OF THE DRAWINGS

The invention will now be described in further detail with reference to the accompanying drawings in which:
Fig. 1 illustrates a front view of a SR wind turbine;
Fig. 2 illustrates a front view of a MR wind turbine;
Fig. 3 illustrates the load carrying structure;
Fig. 4 illustrates one option for routing objects through a path inside the tower and load carrying structures;
Figs. 5, 6 illustrate an MR wind turbine with another option for routing objects according to the present disclosure;
Figs. 7, 8 illustrate details of one embodiment of an MR wind turbine and particularly illustrate entry or exit of an object into or out of the nacelle;
Figs. 9, 10 illustrate details of another embodiment of an MR wind turbine and particularly illustrate entry or exit of an object;
Figs. 11, 12 correspond to Figs. 8, 9 and 10 but in an alternative embodiment; and
Figs. 13-16 illustrate alternative embodiments with a second hoisting line;
Fig. 17 illustrates an embodiment where the nacelle is located below the load carrying structure;
Figs. 18-20 illustrate different embodiments in cross sections through the load carrying structure.

### DETAILED DESCRIPTION OF THE DRAWINGS

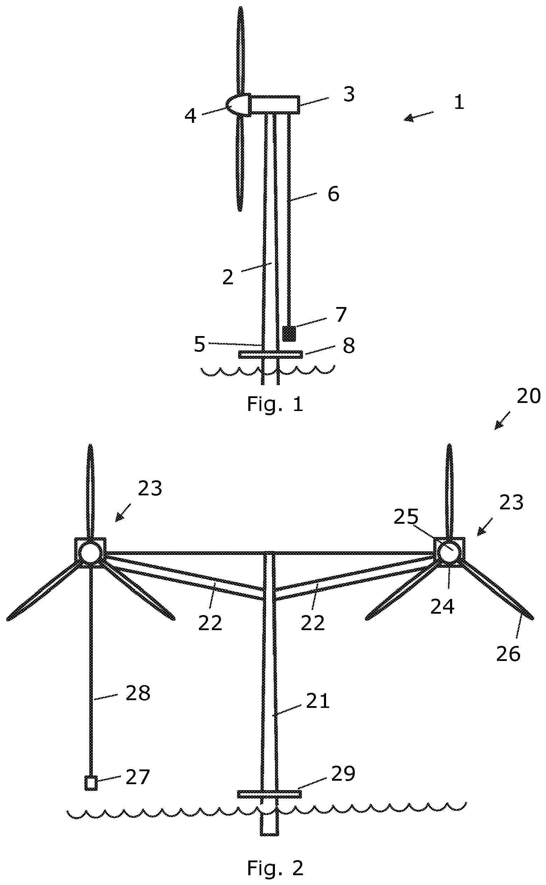

Fig. 1 illustrates a SR wind turbine 1 with a tower 2, an energy generating unit 3, a rotor 4, and a tower base 5. The illustrated wind turbine is an offshore SR, and the nacelle includes a hoist with a hoisting line 6 for hoisting objects 7 to and from the energy generating unit. The hoist will be aligned vertically with the platform at the tower base due to the position of the energy generating unit directly on top of the tower. This allows direct hoisting of objects from and to the tower base platform 8 to the energy generating unit.

Fig. 2 illustrates a front view of a MR wind turbine 20 comprising a tower 21 carrying two load carrying structures 22.

The load carrying structures extend in opposite outwards directions away from the tower 21.

Each load carrying structure 22 supports an energy generating unit 23, and each energy generating unit 23 comprises a nacelle 24 and a rotor 25 carrying three wind turbine blades 26, sweeping an area.

The load carrying structures 22 are attached to the tower 21 via a yaw arrangement, allowing the entire pair of load carrying structures to perform yawing movements with respect to the tower 21 in order to direct the rotors 25 into the incoming wind.

When the multirotor wind turbine 20 is operational, the energy generating units 23 are placed symmetrically around the tower 21 so that the multirotor wind turbine is balanced.

For maintenance and service, the MR turbine comprises a hoist by which objects 27 can be hoisted from ground to the nacelle by the hoisting line 28.

The illustrated MR wind turbine is an off-shore wind turbine, and since the energy generating unit 23 is not directly over the tower top, logistics becomes more complicated, and the hoisted objects does not, by virtue of gravity alone, arrive at the tower base platform 29.

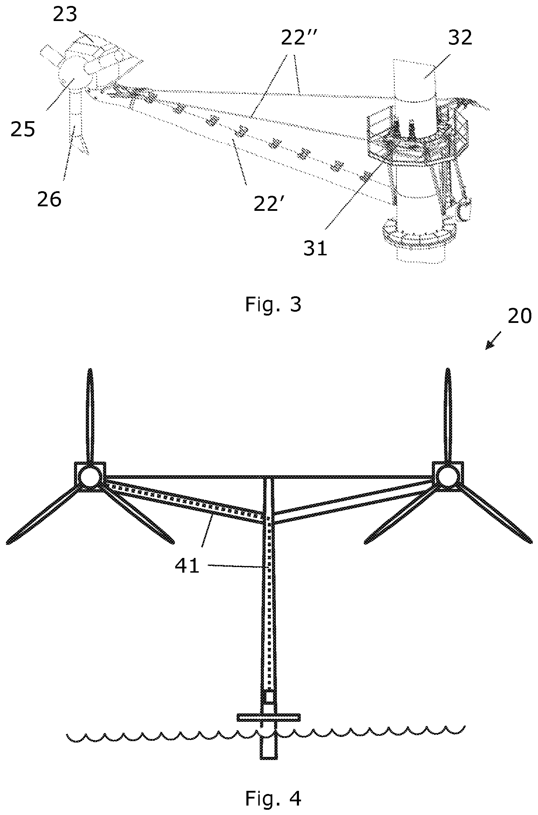

Fig. 3 illustrates the load carrying structure 22, including a first part 22' and a second part 22". The first part 22' acts as compression elements and it is supported by the second part 22" forming a tension element in the form of two guy wires extending from a swivel arrangement 31 on the tower top 32. The first part 22' carries the energy generating unit 23 and is configured for carrying also the hoist which is either attached directly to the first part, or attached inside the nacelle of the energy generating unit. The first part is a hollow tube providing internal passage between the energy generating unit 23 and the tower 21.

Fig. 4 illustrates by a dotted line 41, one option for routing objects through a path inside the tower and load carrying structures. While this procedure allows the objects to arrive at the tower base platform, it takes longer time due to obstacles, and large objects may not fit through the tower and through the narrow passage of the load carrying structure.

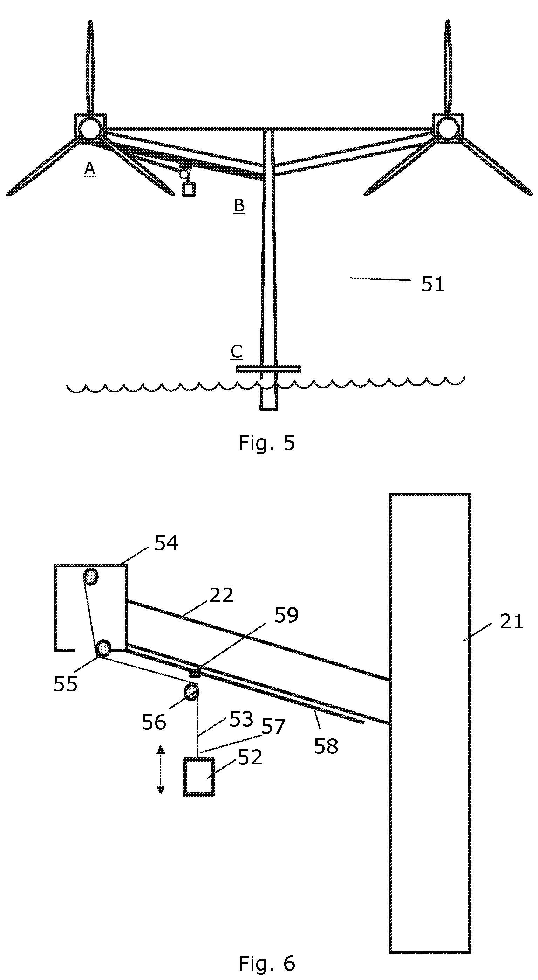

Fig. 5 illustrates an MR wind turbine 51 with another option for routing objects 52 to and from the tower base platform. Fig. 6 illustrates in an enlarged view, parts of the MR wind turbine from Fig. 5. In the illustrations of Figs. 5 and 6, the MR wind turbine comprises a hoisting line 53 for communication of the object 52 to and from the nacelle 54 of the energy generating unit. The hoisting line is windable from an attachment point 55 of the energy generating unit. The attachment point 55 could also be a point on the load carrying structure. The hoisting line extends from the attachment point via a suspension point 56 to a free end 57 where the object 52 is attached.

The suspension point 56 is, in this embodiment, constituted by a pulley, and it is movable outside the load carrying structure along a track 58. For this purpose, it is attached to a vehicle 59.

There are two distinct phases in the hoisting operation:
Phase 1: From point A to point B, c.f. Fig. 5, or vice-versa. Here the pulley 56 is locked such that the hoisting line does not move relative to the pulley. At the same time, the vehicle 59 is free to move along the track 58. If the pulley 56 were not locked, the vehicle would slide towards point A, and the object would be lowered vertically below the energy generating unit 54.
Phase 2: From point B to point C, or vice-versa. Here the vehicle is locked such that the vehicle does not move relative to track. The pulley is free, meaning that the hoisting line can move relative to the pulley. If both were free, the vehicle would slide towards point A, and the object would be lowered vertically below the energy generating unit 54, i.e. landing on the water.

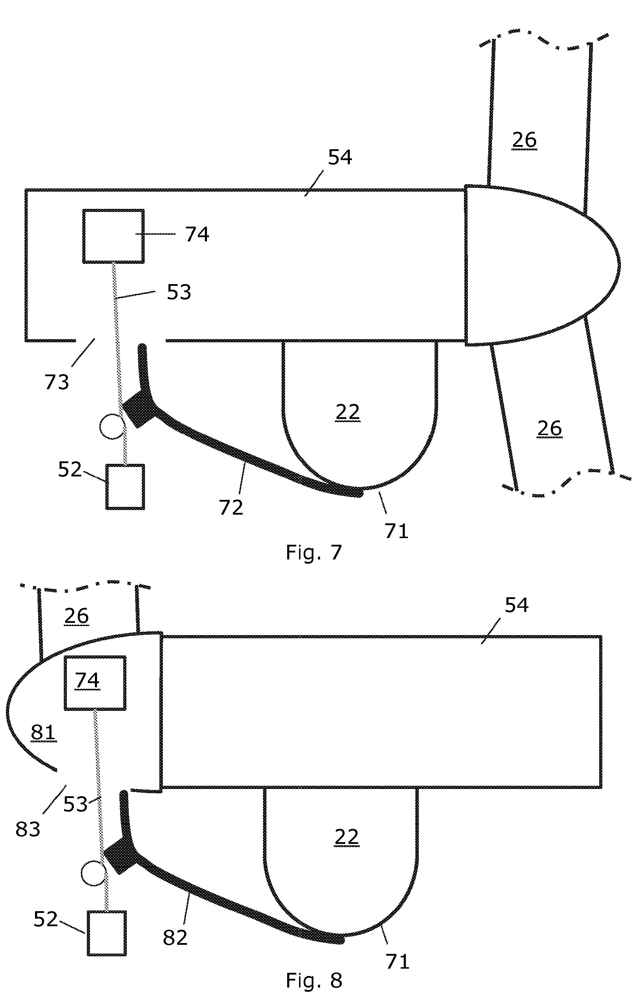

Fig. 7 illustrates details of one embodiment of an MR wind turbine and particularly illustrates entry or exit of an object 52 into or out of the nacelle 54 when the object is moving from a rear part of the interior of the nacelle to the lower part 71 of the load carrying structure 22 (or vice-versa), the rail-section 72 may be used. The rail-section 72 continues a trajectory from the load carrying structure 22 all the way to the nacelle hatch opening 73, underneath the nacelle hoist 74.

Fig. 8 illustrates details of one embodiment of an MR wind turbine and particularly illustrates entry or exit of an object 52 into or out of the nacelle 54 when the object is moving from the hub 81 of the rotor to the lower part 71 of the load carrying structure 22 (or vice-versa), the rail-section 82 may be used. The rail-section 81 continues a trajectory from the load carrying structure 22 all the way to just outside the hub hatch opening 83, underneath the nacelle hoist 74.

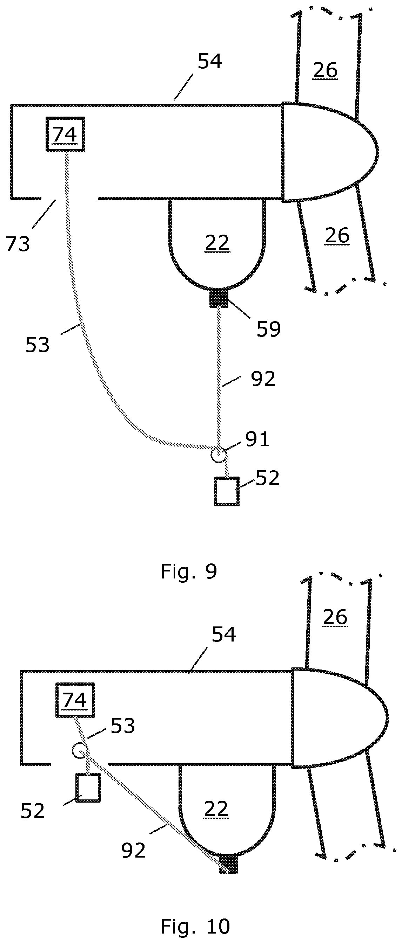

Fig. 9 illustrates details of one embodiment of an MR wind turbine and particularly illustrates entry or exit of an object 52 into or out of the nacelle 54 when the object is moving from a rear part of the interior of the nacelle to a path along the load carrying structure 22 (or vice-versa). In this alternative, the track 58, and thereby also the vehicle 59 following the track, stops at the tip of the load carrying structure 22. The additional pulley 91 is connected to the vehicle 59 through a cable 92. The cable 92 is sufficiently long to reach the nacelle hatch 73.

Fig. 10 illustrates the embodiment from Fig. 9, where the nacelle hoist pulls the pulley with the object inside the nacelle.

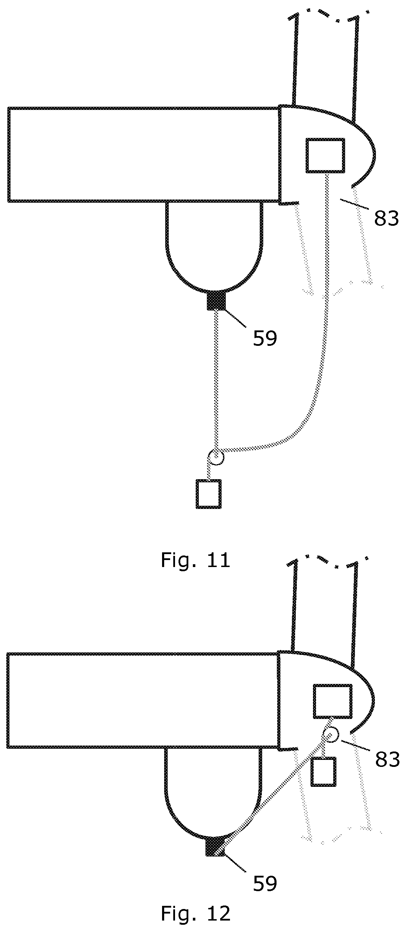

Figs. 11, 12 correspond to Figs. 9 and 10 but with the hoisting line through a hub hatch opening 83 like in fig. 8.

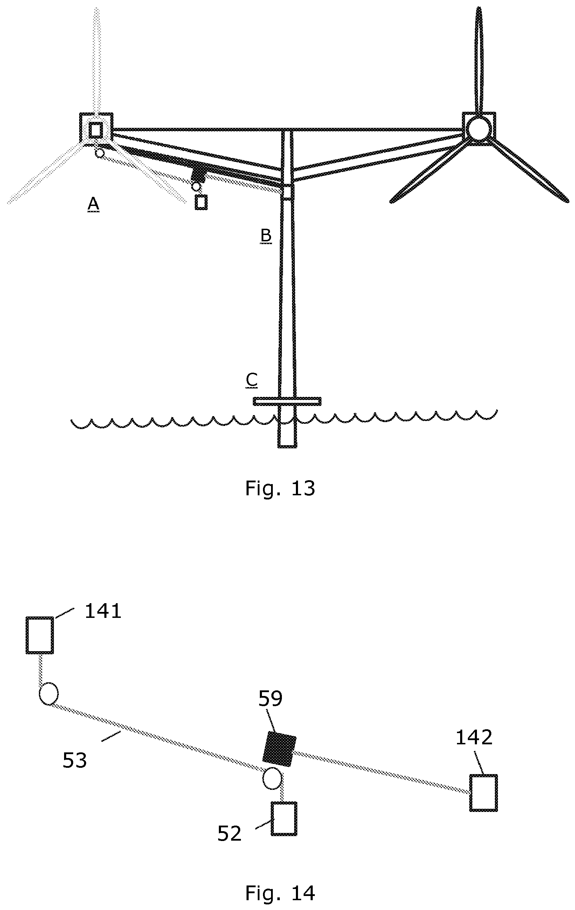

Fig. 13 illustrates an alternative to the locking of the pulley and vehicle discussed previously relative to Fig. 5. Details of the hoisting system are illustrated in Fig. 14. The system comprises two synchronized hoists. Hoist number 141 holds the cable with the object, and hoist number 142 holds the vehicle, and thereby defines the position of the suspension point along the load carrying structure and prevents it from sliding up towards the nacelle.

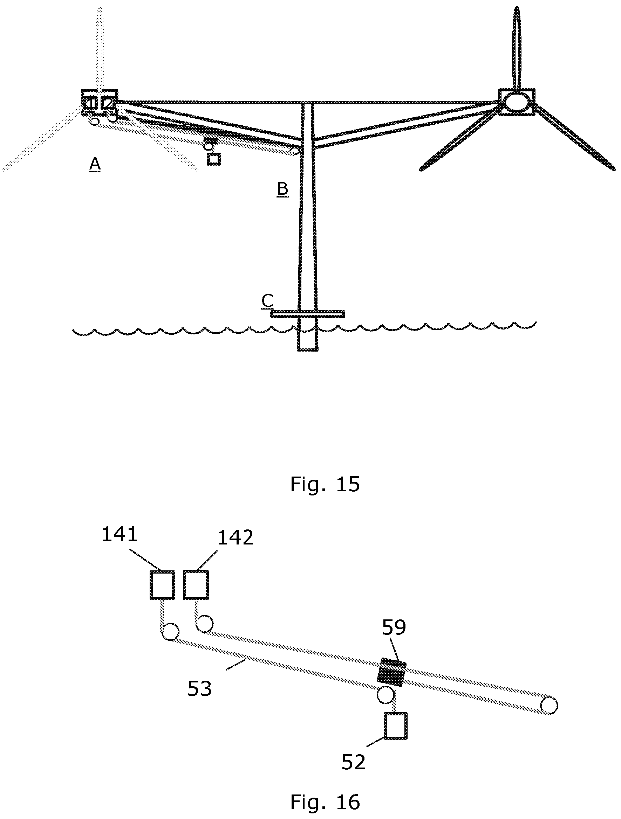

Fig. 15 illustrates another alternative to the locking of the pulley and vehicle discussed previously relative to Fig. 5. Details of the hoisting system are illustrated in Fig. 16. The system comprises a hoist number 141 like the one in Figs. 13, 14, and a hoist number 142 which is located in the nacelle. This requires an additional pulley 151 to make the cable from hoist 142 pull the vehicle towards the tower.

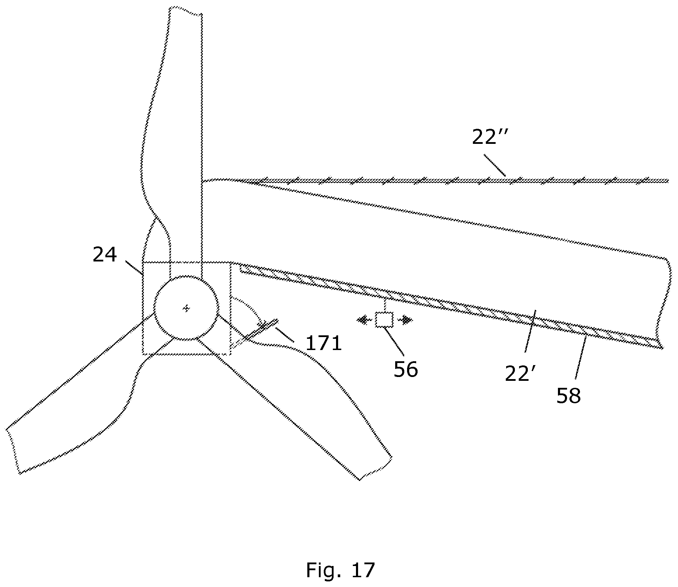

Fig. 17 illustrates a nacelle which is suspended by its roof section below the load carrying structure. The nacelle has a hatch 171 sideways into an inner space in the nacelle, and the track 58 extends all the way to the hatch and allows the object to be transferred by the hoisting line from the inner space directly by use of the first vehicle.

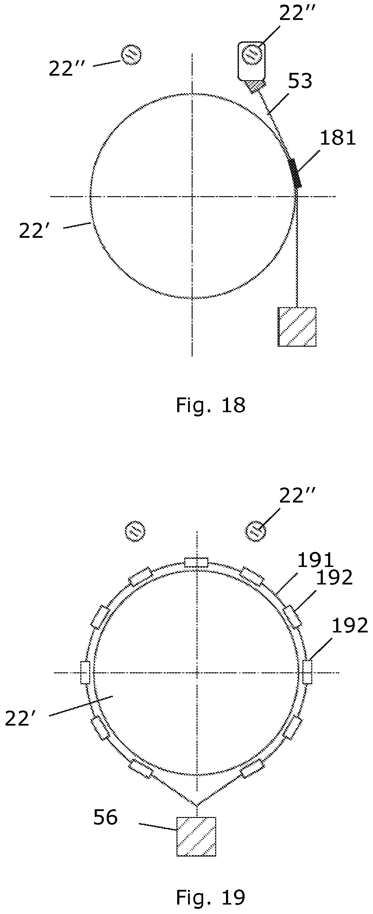

Fig. 18 illustrates an embodiment where the load carrying structure, includes a first part 22' and a second part 22", c.f. the embodiment illustrated in Fig. 3. The first part 22' acts as compression elements and it is supported by the second part 22" forming a tension element. In the embodiment illustrated by Fig. 17, the track is formed by one of the tension elements 22", and the hoisting line 53 slides along an outer surface of the compression element 22'. For this purpose, the hoisting line includes a roller element 181 configured to roll along the outer surface of the compression element 22'

Fig. 19 illustrates an embodiment where the suspension point 56 is movable by use of a sling structure 191 suspended around the load carrying structure 22', in this case around the compression element 22' of the load carrying structure. The sling element may be a wire with a plurality of balls or rollers 192 enabling rolling of the sling along the outer surface of the load carrying structure. The sling could also be constituted by a more rigid frame structure, e.g. a structure of rigid beams or a moulded structure forming a saddle to be supported on the upper surface of the load carrying structure and provided with balls or rolls or similar means enabling it to slide along the load carrying structure while carrying the suspension point and thereby moving the suspension point outside the load carrying structure.

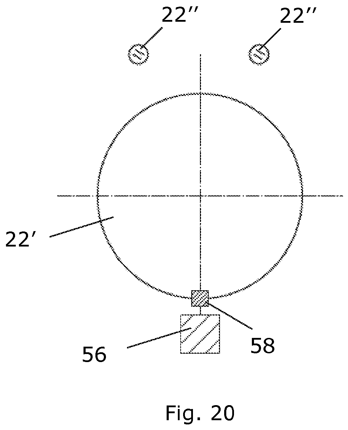

Fig. 20 illustrates in a cross section, the embodiment of Fig. 6, where the track is attached directly to a lower surface of the load carrying structure, and in this case to the compression element 22' of the load carrying structure.

## Claims

1. A multiple rotor (MR) wind turbine comprising a tower (21) extending in an upwards direction, a load carrying structure (22) extending in an outwards direction and being carried by the tower, and an energy generating unit (54) carried by the load carrying structure, wherein the outwards direction is transverse to the upwards direction, the wind turbine further comprising a hoisting line (53) configured to transport of objects (52) to and from the energy generating unit (54), the hoisting line being windable from an attachment point (55) of the load carrying structure or from the energy generating unit, the hoisting line (53) extending from the attachment point via a suspension point (56) to a lifting point (57) where the object (52) is to be attached, where the suspension point (56) is movable outside the load carrying structure, wherein the suspension point is movable along a track (58), wherein the track (58) holds the suspension point (56) via a first vehicle (59) guided by the track.

2. The MR wind turbine according to claim 1, wherein the first vehicle and the suspension point (56) are connected by a cable.

3. The MR wind turbine according to any of the preceding claims, comprising a winding structure located inside a nacelle of the energy generating unit.

4. The MR wind turbine according to any of the preceding claims, wherein movement between the hoisting line and the suspension point can be prevented or limited.

5. The MR wind turbine according to any of the preceding claims, wherein movement between the suspension point and the load carrying structure can be prevented.

6. The MR wind turbine according to any of the preceding claims, comprising a hatch opening (73, 83) into an inner space in the energy generating unit, and a continuous path for the hoisting line from the hatch to the load carrying structure.

7. The MR wind turbine according to claim 6, wherein the continuous path is provided by a rail-section (72, 82) holding the suspension point (56).

8. The MR wind turbine according to claim 7, wherein the rail-section (72, 82) forms an extension of the track (58) and holds the suspension point (56) via the first vehicle (59).

9. The MR wind turbine according to claim 8, wherein the rail-section (72, 82) is separate from the track (58) and holds the suspension point (56) via a second vehicle guided by the rail-section.

10. The MR wind turbine according to claim 9, wherein the second vehicle and the suspension point (56) are connected by a cable.

11. The MR wind turbine according to any of the preceding claims, comprising a second hoisting line being windable from a second attachment point at the tower, wherein the second hoisting line is arranged to move the suspension point (56) along the load carrying structure.

12. The MR wind turbine according to claim 1 and 11, wherein the second hoisting line moves the suspension point (56) by moving the first vehicle.

13. The MR wind turbine according to claims 1 or 12, wherein the second hoisting line is winded by a winch located in the energy generating unit.

14. A method of handling a wind turbine object (52) in a wind turbine comprising a tower (21) extending in an upwards direction, a load carrying structure (22) fixed to the tower and extending in an outwards direction transverse to the upwards direction, and an energy generating unit (54) fixed to the load carrying structure, the method comprising:
- providing a hoisting line (53) being windable from an attachment point (55) of the load carrying structure or of the energy generating unit (54) and extending from the attachment point to a lifting point (57),
- providing a suspension point (56) which is movable along an outer surface of the load carrying structure (22),
- suspending the hoisting line (53) in the suspension point, the suspension point being between the attachment point (55) and the lifting point (57); and
- moving the suspension point (56) along the outer surface along a track (58), the track (58) holds the suspension point (56) via a first vehicle (59) guided by the track, while winding out the hoisting line (53) from the attachment point (55).

## Patentansprüche

1. Windkraftanlage mit mehreren Rotoren (MR), umfassend einen sich in Aufwärtsrichtung erstreckenden Turm (21), eine sich in Auswärtsrichtung erstreckende, und vom Turm getragene Lastenträgerstruktur (22) und eine von der Lastenträgerstruktur getragene Energieerzeugungseinheit (54), wobei die Auswärtsrichtung quer zur Aufwärtsrichtung verläuft, wobei die Windkraftanlage weiter eine Hebezeugleine (53) umfasst, die für den Transport von Objekten (52) zur und von der Energieerzeugungseinheit (54) konfiguriert ist, wobei die Hebezeugleine von einem Befestigungspunkt (55) der Lastenträgerstruktur oder der Energieerzeugungseinheit wickelbar ist, wobei sich die Hebezeugleine (53) vom Befestigungspunkt über einen Aufhängepunkt (56) zu einem Hebepunkt (57) erstreckt, an dem das Objekt (52) zu befestigen ist, wobei der Aufhängepunkt (56) außerhalb der Lastenträgerstruktur beweglich ist, wobei der Aufhängepunkt entlang einer Bahn (58) beweglich ist, wobei die Bahn (58) den Aufhängepunkt (56) über ein von der Bahn geführtes erstes Fahrzeug (59) hält.

2. MR-Windkraftanlage nach Anspruch 1, wobei das erste Fahrzeug und der Aufhängepunkt (56) durch ein Kabel verbunden sind.

3. MR-Windkraftanlage nach einem der vorstehenden Ansprüche, umfassend eine Wicklungsstruktur, die sich innerhalb einer Gondel der Energieerzeugungseinheit befindet.

4. MR-Windkraftanlage nach einem der vorstehenden Ansprüche, wobei eine Bewegung zwischen der Hebezeugleine und dem Aufhängepunkt verhindert oder begrenzt werden kann.

5. MR-Windkraftanlage nach einem der vorstehenden Ansprüche, wobei eine Bewegung zwischen dem Aufhängepunkt und der Lastenträgerstruktur verhindert werden kann.

6. MR-Windkraftanlage nach einem der vorstehenden Ansprüche, umfassend eine Lukenöffnung (73, 83) in einen Innenraum der Energieerzeugungseinheit und einen durchgehenden Pfad für das Hebezeugseil von der Luke zur Lastenträgerstruktur.

7. MR-Windkraftanlage nach Anspruch 6, wobei der durchgehende Pfad durch eine Schienensektion (72, 82) gebildet wird, die den Aufhängepunkt (56) hält.

8. MR-Windkraftanlage nach Anspruch 7, wobei die Schienensektion (72, 82) eine Erweiterung der Bahn (58) bildet und den Aufhängepunkt (56) über dem ersten Fahrzeug (59) hält.

9. MR-Windkraftanlage nach Anspruch 8, wobei die Schienensektion (72, 82) von der Bahn (58) getrennt ist und den Aufhängepunkt (56) über einem zweiten, von der Schienensektion geführten Fahrzeug hält.

10. MR-Windkraftanlage nach Anspruch 9, wobei das zweite Fahrzeug und der Aufhängepunkt (56) durch ein Kabel verbunden sind.

11. MR-Windkraftanlage nach einem der vorstehenden Ansprüche, umfassend eine zweite Hebezeugleine, die von einem zweiten Befestigungspunkt am Turm wickelbar ist, wobei die zweite Hebezeugleine angeordnet ist, um den Aufhängepunkt (56) entlang der Lastenträgerstruktur zu bewegen.

12. MR-Windkraftanlage nach Anspruch 1 und 11, wobei die zweite Hebezeugleine den Aufhängepunkt (56) durch Bewegen des ersten Fahrzeugs bewegt.

13. MR-Windkraftanlage nach Anspruch 1 oder 12, wobei die zweite Hebezeugleine durch eine in der Energieerzeugungseinheit befindliche Winde gewickelt wird.

14. Verfahren zur Handhabung eines Windkraftanlagenobjekts (52) in einer Windkraftanlage, die einen sich in Aufwärtsrichtung erstreckenden Turm (21), eine am Turm fixierte und sich in Auswärtsrichtung quer zur Aufwärtsrichtung erstreckende Lastenträgerstruktur (22) und eine an der Lastenträgerstruktur fixierte Energieerzeugungseinheit (54) umfasst, wobei das Verfahren umfasst:
- Bereitstellen einer Hebezeugleine (53), die von einem Befestigungspunkt (55) der Lastenträgerstruktur oder der Energieerzeugungseinheit (54) wickelbar ist und sich vom Befestigungspunkt zu einem Hebepunkt (57) erstreckt,
- Bereitstellen eines Aufhängepunkts (56), der entlang einer Außenoberfläche der Lastenträgerstruktur (22) beweglich ist
- Aufhängen der Hebezeugleine (53) am Aufhängepunkt, wobei sich der Aufhängepunkt zwischen dem Befestigungspunkt (55) und dem Hebepunkt (57) befindet; und
- Bewegen des Aufhängepunkts (56) entlang der Außenoberfläche entlang einer Bahn (58), wobei die Bahn (58) den Aufhängepunkt (56) über ein erstes Fahrzeug (59) hält, das von der Bahn geführt wird, während die Hebezeugleine (53) vom Befestigungspunkt (55) abgewickelt wird.

## Revendications

1. Éolienne à rotors multiples (MR) comprenant une tour (21) s'étendant dans une direction vers le haut, une structure porteuse de charge (22) s'étendant dans une direction vers l'extérieur et qui est portée par la tour, et une unité de production d'énergie (54) portée par la structure porteuse de charge, dans laquelle la direction vers l'extérieur est transversale à la direction vers le haut, l'éolienne comprenant en outre une ligne de levage (53) configurée pour transporter des objets (52) vers, et depuis, l'unité de production d'énergie (54), la ligne de levage pouvant être enroulée à partir d'un point de fixation (55) de la structure porteuse de charge ou de l'unité de production d'énergie, la ligne de levage (53) s'étendant depuis le point de fixation via un point de suspension (56), jusqu'à un point de levage (57) où l'objet (52) doit être fixé, où le point de suspension (56) peut se déplacer à l'extérieur de la structure porteuse de charge, dans laquelle le point de suspension se déplace le long d'une voie (58), dans laquelle la voie (58) maintient le point de suspension (56) via un premier véhicule (59) guidé par la voie.

2. Éolienne à MR selon la revendication 1, dans laquelle le premier véhicule et le point de suspension (56) sont reliés par un câble.

3. Éolienne à MR selon l'une quelconque des revendications précédentes, comprenant une structure d'enroulement située à l'intérieur d'une nacelle de l'unité de production d'énergie.

4. Éolienne à MR selon l'une quelconque des revendications précédentes, dans laquelle le mouvement entre la ligne de levage et le point de suspension peut être empêché ou limité.

5. Éolienne à MR selon l'une quelconque des revendications précédentes, dans laquelle le mouvement entre le point de suspension et la structure porteuse de charge peut être empêché.

6. Éolienne à MR selon l'une quelconque des revendications précédentes, comprenant une ouverture de trappe (73, 83) dans un espace interne dans l'unité de production d'énergie, et un trajet continu pour la ligne de levage depuis la trappe jusqu'à la structure porteuse de charge.

7. Éolienne à MR selon la revendication 6, dans laquelle le trajet continu est assuré par une section de rail (72, 82) maintenant le point de suspension (56).

8. Éolienne à MR selon la revendication 7, dans laquelle la section de rail (72, 82) forme une extension de la voie (58) et maintient le point de suspension (56) via le premier véhicule (59).

9. Éolienne à MR selon la revendication 8, dans laquelle la section de rail (72, 82) est séparée de la voie (58) et maintient le point de suspension (56) via un second véhicule guidé par la section de rail.

10. Éolienne à MR selon la revendication 9, dans laquelle le second véhicule et le point de suspension (56) sont reliés par un câble.

11. Éolienne à MR selon l'une quelconque des revendications précédentes, comprenant une seconde ligne de levage pouvant être enroulée à partir d'un second point de fixation au niveau de la tour, dans laquelle la seconde ligne de levage est agencée pour déplacer le point de suspension (56) le long de la structure porteuse de charge.

12. Éolienne à MR selon les revendications 1 et 11, dans laquelle la seconde ligne de levage déplace le point de suspension (56) en déplaçant le premier véhicule.

13. Éolienne à MR selon les revendications 1 ou 12, dans laquelle la seconde ligne de levage est enroulée par un treuil situé dans l'unité de production d'énergie.

14. Procédé de manutention d'un objet d'éolienne (52) dans une éolienne comprenant une tour (21) s'étendant dans une direction vers le haut, une structure porteuse de charge (22) fixée à la tour et s'étendant dans une direction vers l'extérieur transversale à la direction vers le haut, et une unité de production d'énergie (54) fixée à la structure porteuse de charge, le procédé comprenant :
- la fourniture d'une ligne de levage (53) pouvant être enroulée à partir d'un point de fixation (55) de la structure porteuse de charge ou de l'unité de production d'énergie (54) et s'étendant depuis le point de fixation jusqu'à un point de levage (57),
- la fourniture d'un point de suspension (56) qui peut se déplacer le long d'une surface externe de la structure porteuse de charge (22),
- la suspension du câble de levage (53) au point de suspension, le point de suspension étant situé entre le point de fixation (55) et le point de levage (57) ; et
- le déplacement du point de suspension (56) le long de la surface externe le long d'une voie (58), la voie (58) maintient le point de suspension (56) via un premier véhicule (59) guidé par la voie, tout en déroulant la ligne de levage (53) à partir du point de fixation (55).
